# FASCICULE DE BREVET EUROPEEN

(11) **EP 0 523 552 B1**
(45) Date de publication et mention de la délivrance du brevet: **18.09.1996**
(21) Numéro de dépôt: 92111718.0
(22) Date de dépôt: 09.07.1992
(51) Int. Cl.: H04Q 1/14, H01T 4/00

(54) **Tête de câble téléphonique**
Fernsprechkabelkopf
Telephone cable head

(30) Priorité: 12.07.1991 FR 9108849
(43) Date de publication de la demande: 20.01.1993
(73) Titulaire: ALCATEL CABLE INTERFACE, F-08330 Vrigne aux Bois (FR)
(72) Inventeur: Audeval, Fabrice, F-08090 Aiglemont (FR); Chezyl, Eric, F-08200 Sedan (FR)
(74) Mandataire: Weinmiller, Jürgen

(56) Documents cités:
- EP-A- 0 123 905
- FR-A- 2 469 020
- FR-A- 2 498 865
- FR-A- 2 530 910

## Description

La présente invention concerne les répartiteurs téléphoniques et porte plus particulièrement sur une tête de câble destinée à être installée sur les répartiteurs téléphoniques.

Les têtes de câble concernées sont déjà en tant que telles connues. Elles permettent la séparation et la protection des paires de lignes d'un ou de plusieurs câbles pour leur raccordement à un autocommutateur. Selon la gamme de produits actuellement commercialisés les têtes de câble permettent le raccordement de 28, 56, 112, 224, 448 ou 896 paires des lignes d'un ou de plusieurs câbles à un autocommutateur. Ce raccordement est assuré par des jarretières.

Ces têtes de câble sont constituées par un ensemble de connexion de 28 ou 56 paires, pour des têtes correspondantes de 28 ou 56 paires, ou d'un ou plusieurs ensembles de connexion de 112 paires pour des têtes de 112 à 896 paires. Elles comportent des ensembles de protection affectés à chaque ensemble de connexion et protégeant chaque ligne contre d'éventuelles surtensions possibles. Les têtes de câble ainsi constituées et protégées sont fixées en une ou plusieurs colonnes sur les fermes du répartiteur.

Selon les documents FR-A-2 440 636 et FR-A-2 467 500, chaque ensemble de connexion comporte un ou une pluralité de blocs modulaires de connexion empilés les uns sur les autres. En particulier, chaque bloc modulaire assure la connexion de 7 paires. Ces blocs de connexion sont communément appelés galette de connexion. La protection de chaque paire de la galette est assurée par un module de protection.

Selon le mode de réalisation décrit dans le document FR-A-2 467 500 notamment, chaque galette est constituée par une embase isolante portant d'une part une rangée de contacts arrière pour les 7 paires de conducteurs de câble et une rangée de contacts avant pour les fils de jarretières d'utilisation, en regard l'une de l'autre, et d'autre part une barrette de masse. La barrette de masse est montée dans la face arrière de la galette, elle est parallèle mais sans contact avec la rangée de contacts arrière.
Cette galette est fixée sur une goulotte arrière de passage du ou des câbles desservant un ou plusieurs ensembles de connexion, la goulotte étant elle-même fixée sur un répartiteur.

Chaque module de protection est enfiché pratiquement en totalité par l'avant, dans l'embase cloisonnée au pas des lignes. Il est constitué par un corps isolant dans lequel sont montés deux parafoudres bipolaires pour chaque ligne et portant deux contacts par parafoudre. Ces deux contacts sont reliés aux deux bornes du parafoudre considéré et sont légèrement saillants sur l'extérieur du corps. Lorsque le module est enfiché en place dans la galette, l'un des deux contacts de chaque parafoudre est raccordé à la barrette de masse et l'autre raccorde l'un des contacts arrière au contact avant de même rang, à l'intérieur de la galette.

Selon l'un ou l'autre de ces deux documents, chaque galette présente des canaux guide-fils sur l'extérieur d'au moins l'une de ses deux grandes faces, en particulier pour les jarretières la desservant. Ces canaux pour les jarretières sont en forme de crosse et débouchent d'une part sur le bord avant de la galette, au droit des contacts avant et d'autre part sur l'un de ses côtés latéraux. Sur ce côté latéral, la galette peut être munie d'un anneau de retenue des jarretières.

En outre, cette galette présente aussi des moyens d'encliquetage arrière pour sa fixation sur le rail ou goulotte de passage du ou des câbles.

De manière courante, les galettes appartenant à un même ensemble de connexion peuvent être fixées non pas directement sur le rail ou goulotte mais par l'intermédiaire d'une pièce passe-fils. Ce passe-fils présente un axe d'articulation pour les galettes. Celles-ci sont alors, en outre, bloquées relativement les unes par rapport aux autres dans l'empilement réalisé, par des tirants traversant l'empilement. L'ensemble a en outre des moyens d'identification de ses galettes individuelles et leurs différentes lignes.

La présente invention a pour but une simplification importante du montage des galettes dans leur ensemble de connexion et une fiabilité accrue des liaisons des paires, tout en assurant une protection efficace contre des surtensions éventuelles et des contacts accidentels éventuels entre paires raccordées. Elle conduit en outre à un encombrement réduit de la tête de câble résultante.

La demande de brevet européen 92111611.7 de même date de dépôt que la présente demande décrit une tête de câble répondant à ces objectifs. La présente invention permet d'obtenir un encombrement encore moindre pour des conditions spécifiques d'utilisation de la tête, pour lesquelles les raccordements de jarretières et de conducteurs sont réalisés exclusivement à l'aide d'un outil spécial, en tant que tel connu, et non de manière possible à l'aide de poussoirs individuels.

La tête de câble téléphonique selon la présente invention, comportant :
- un profilé porteur métallique de fixation sur le répartiteur, recevant au moins un câble à paires de conducteurs multiples ;
- au moins un ensemble de connexion fixé sur ledit profilé par l'intermédiaire d'un axe latéral solidaire du profité, pour son ouverture et sa fermeture sur le profilé, et formé par une pluralité de galettes de connexion identiques empilées verticalement les unes sur les autres, avec chaque galette dans son ensemble considéré fermé sur le profilé équipée de connexions arrière de ligne sur l'une de ses faces dite arrière, de raccordement des paires de conducteurs de câble, et de connexions avant de ligne sur la face opposée dite avant, de raccordement de paires de fils de jarretières de ligne, pour le raccordement de lignes ;
- des modules de protection de ligne, enfichables dans les galettes individuelles, chacun à dispositifs internes de protection raccordés aux lignes individuelles, est caractérisée en ce que lesdites galettes comportent des contacts internes plats dits de ligne, disposés côte à côte en au moins une rangée, ayant chacun une première extrémité accessible sur ladite face avant de la galette considérée et y définissant, sous forme d'une connexion double autodénudante, l'une desdites connexions avant de ligne et une connexion avant de dérivation associée de raccordement d'un fil d'une jarretière de dérivation, et la deuxième extrémité de ce même contact de ligne accessible sur ladite face arrière de la galette et y définissant, sous forme d'une connexion double mixte, l'une desdites connexions arrière de ligne, de type fourche simple autodénudante, et une connexion arrière dite de protection de ligne associée de type connexion à serrage ; et en ce que lesdits modules de protection sont enfichables chacun sur la face arrière de l'une desdites galettes, pour ladite tête ouverte sur ledit profilé, et comportent des contacts internes dits de protection de ligne ayant une de leurs extrémités raccordée intérieurement à des pattes de protection de ligne desdits dispositifs de protection et une seconde extrémité formant une queue de connexion accessible sur une face dite avant de chaque module et reçue dans l'une desdites connexions arrière de protection de ligne de la galette.

La tête de câble selon la présente invention présente en outre au moins l'une des particularités suivantes :
- elle comporte deux rangées de contacts de ligne dans chaque galette, avec lesdits contacts de ligne de même rang desdites rangées affectées aux deux conducteurs de câble de la même paire ;
- lesdits dispositifs de protection sont de type tripolaire et présentent une patte de masse et deux pattes de protection de ligne et sont montés côte à côte dans un boîtier du module de protection, et lesdits contacts de protection de ligne sont disposés en deux rangées dans ledit boîtier, avec ceux de même rang recevant les deux pattes de protection de ligne du même dispositif de protection et ayant leurs queues de connexion reçues dans les deux connexions arrière de protection de ligne également de même rang sur la face arrière de la galette ;
- les connexions doubles avant et arrière de chaque galette sont protégées dans des cheminées inidviduelles dites avant et arrière, en deux rangées sur chacune des faces avant et arrière de la galette ;
- chaque galette reçoit un guide fils pour les jarretières, monté entre les deux rangées de cheminées avant, et définit un canal pour les conducteurs de câble entre les deux rangées de cheminées arrière ;
- les galettes comportent chacune, sur leurs faces supérieure et inférieure délimitant entre elles lesdites faces avant et arrière de la galette, un système complémentaire de queue d'aronde parallèle aux bords avant et arrière des faces supérieure et inférieure, d'accrochage direct de l'une des galettes sur celle adjacente dans l'ensemble de connexion, quand l'ensemble de connexion est ouvert sur ledit profilé.

Les caractéristiques et avantages de la présente invention ressortiront de la description donnée ci-après d'un mode préféré de réalisation illustré dans les dessins ci-annexés. Dans ces dessins :
- La figure 1 est une vue générale schématique d'une tête de câble, selon l'invention, montée sur un répartiteur et formée essentiellement de galettes de raccordement et de modules de protection associés,
- La figure 2 est une vue de dessus partiellement coupée d'une galette et du module de protection connecté à la galette,
- La figure 3 est une vue en coupe verticale de l'une des galettes et du module de protection connecté à cette galette,
- La figure 4 représente en perspective un contact dit de protection de ligne monté dans le module de protection,
- La figure 5 représente une barrette de masse associée aux galettes d'un même ensemble de connexion.

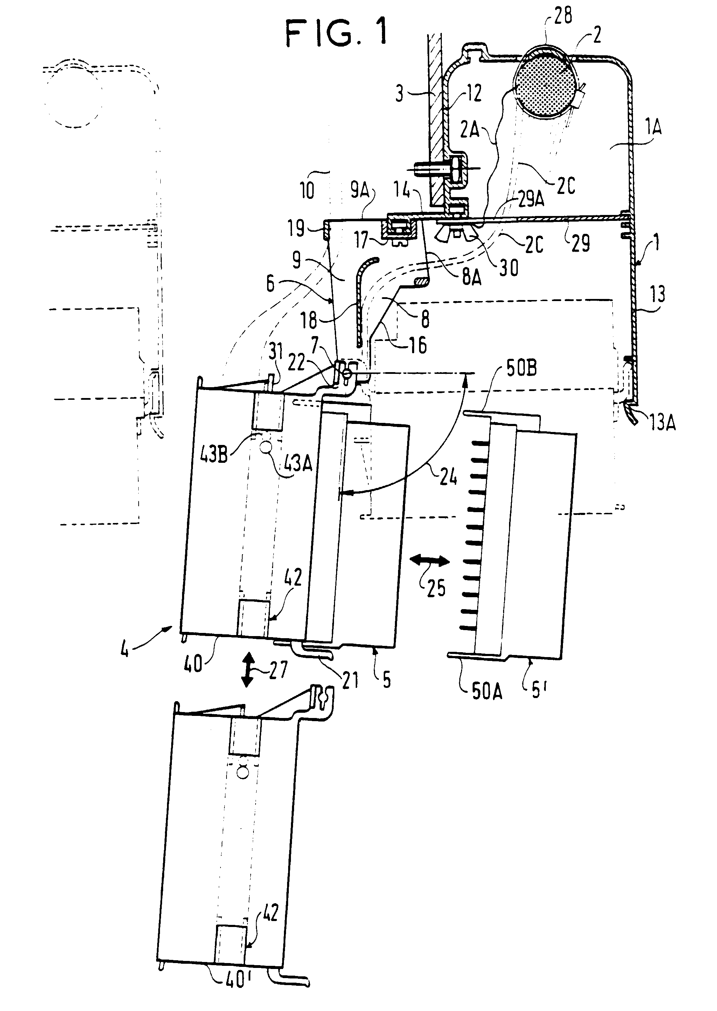

La constitution globale de la tête de câble est décrite en se référant à la figure 1, en considérant la tête telle que montée sur un répartiteur. Cette constitution globale est analogue à celle de la tête décrite dans la demande de brevet précitée de la demanderesse. La tête de câble comporte essentiellement :
- un profilé porteur métallique 1, vertical, définissant une goulotte 1A pour le ou les câbles 2 de la tête et assurant la fixation de la tête sur une ferme 3 du répartiteur à l'aide de vis, cette tête étant illustrée en traits pointillés dans une position dite fermée sur son profilé porteur et en traits pleins dans une position dite ouverte sur son profilé pour l'accès à ses différentes parties constitutives,
- au moins un ensemble de connexion 4, avec chaque ensemble constitué par des galettes individuelles de connexion 40 identiques les unes aux autres et disposées les unes sur les autres en une pile verticale retenue sur l'avant du profilé porteur,
- des modules de protection 5, identiques entre eux pour chaque galette, chacun enfiché dans la face arrière de l'une des galettes 40,
- une pièce dite charnière passe fils 6, fixée le long du profilé 1 à l'aide de vis, définissant d'une part un axe de charnière 7 pour chaque ensemble de connexion 4 et d'autre part deux passages 8 et 9 pour les conducteurs 2C de câble 2 et pour les fils des jarretières 10 qui desservent chaque galette et sont raccordés par paires dans cette galette.

Le profilé porteur 1 est en aluminium. Il présente une section globale en U, avec l'une de ses branches 12 tronquée à mi-niveau par rapport à l'autre 13 et présentant un bord rabattu 14 vers l'extrémité du U. La charnière passe fils est fixée le long du bord rabattu, à l'avant de ce bord, et est saillante sur lui vers l'extérieur du U du profilé 1.

La charnière passe fils 6 présente une série d'ailettes horizontales 16 saillantes sur une toile arrière verticale 17 de fixation sur le bord rabattu 14. Ces ailettes horizontales 16 sont entre elles au pas des galettes 40 empilées de chaque ensemble de connexion. L'axe 7 relie le bord avant des ailettes 16. Ces ailettes définissent entre elles les deux passages 8 et 9 de conducteurs de câble et de fils de jarretières. Elles présentent chacune une nervure arquée 18 s'étendant sensiblement de la toile arrière 17 à l'axe 7 et séparant l'une de l'autre les deux passages 8 et 9. Elles forment entre elles sur le bord de la toile, du côté de l'intérieur du profilé porteur 1, une entrée 8A en forme d'anneau entr'ouvert de retenue des conducteurs de câble dans chaque passage 8. Elles forment entre elles sur l'autre bord de la toile, vers l'arrière du rebord 14 du profilé porteur 1, une entrée 9A en anneau fermé ou quasi fermé de retenue des fils de jarretières dans chaque passage 9. La charnière passe fils 6 assure en outre le repérage des galettes individuelles d'un même ensemble, réalisé à l'aide de numéros d'identification sur l'extrémité latérale arrière notée 19, au niveau des entrées 9A des jarretières.

Les passages 8 et les passages 9 restent par ailleurs ouverts sur le côté intérieur de la charnière passe fils 6 pour les premiers et sur l'extérieur de la charnière passe fils pour les seconds. Les conducteurs 2C de câble restent ainsi du côté intérieur de l'axe 7 et sont amenés le long de la face arrière de la galette de connexion, tandis que les fils de jarretières 10 viennent sur l'extérieur de l'axe 7, sont reçus latéralement dans chaque galette qu'ils desservent et amenés sur sa face avant, pour leur raccordement aux conducteurs dans chaque galette.

Pour sa fixation sur le profilé 1 et sur la charnière passe fils 6, chaque galette présente deux pattes 21 et 22 saillantes sur sa face arrière et ses deux côtés latéraux. La patte 22 est relativement rigide et s'enfourche sur l'axe 7, entre deux ailettes 16. La patte 21 est relativement souple et vient s'encliqueter sur l'extrémité à dent 13A de la branche non tronquée 13 du profilé 1. Dans la tête de câble, les modules de protection 5 affectés aux galettes de connexion 40 sont disposés à l'intérieur de la tête. Chaque ensemble de connexion 4 est pivotant sur l'axe 7, comme illustré par la flèche double 24, pour son ouverture sur le profilé et l'accès à sa partie arrière. Ainsi, lors de cette ouverture, les points de connexion des conducteurs et des jarretières passant à proximité de l'axe d'articulation ne sont pas ou très peu sollicités.

Lors de cette ouverture aussi, l'un quelconque des modules de protection peut être extrait ou enfiché sur l'arrière des galettes, ainsi qu'illustré par la flèche double 25 et le module de protection 5' extrait.

En outre, lors de cette ouverture également, l'une quelconque des galettes 40 peut être extraite ou remise en place dans son ensemble, ainsi qu'illustré par la flèche double 27 et la galette extraite notée 40'.

Sur le répartiteur, on note en outre en regard de la figure 1, que le profilé porteur de l'une des têtes de câble fermée sert de butée pour celle voisine de même niveau qui est ouverte.

La capacité de la tête est définie par le nombre de paires de conducteurs du ou des câbles cheminant dans la goulotte de son profilé porteur. Son organisation en ensembles de connexion, le nombre des ensembles et le nombre de galettes dans chaque ensemble sont choisis en fonction de cette capacité. En pratique chaque galette est affectée à 7 paires et un ensemble de connexion comporte jusqu'à 16 galettes. Bien entendu ces valeurs sont données à titre d'exemple.

Selon cette capacité, le ou les câbles rentrent par l'une et/ou les deux extrémités de la goulotte et sont fixés à cette extrémité à l'intérieur de la goulotte par des colliers individuels 28. Ils peuvent y pénètrer en partie intermédiaire par des ouvertures d'accès prévues dans son fond et sont alors bridés avant d'entrer dans la goulotte. Une plaque de protection 29 à échancrure 29A pour le passage des paires desservant les galettes concernées est fixée entre le bord rabattu 14 du profilé porteur et l'autre branche non tronquée 13 du profilé, pour fermer la goulotte au droit de chaque collier. Les ouvertures intermédiaires sont fermées par des plaques métallisées de traversée, encliquetées depuis l'intérieur du profilé dans ces ouvertures lorsqu'elles ne sont pas utilisées, ou reçoivent un capot métallisé de protection de câble entrant, rapporté depuis l'arrière du profilé autour du câble entrant.

On note en outre que dans cette tête, le profilé 1 assure la mise à la masse générale. Le fil d'écran de masse 2A de chaque câble 2 est relié à cette masse par une vis 30 fixée sur la goulotte au niveau de son entrée dans la goulotte. Les fils d'écran de masse de chaque jarretière 10, non illustrés dans cette figure 1, sont quant à eux reliés à une barrette de masse 31, affectée à chaque ensemble de connexion 4 et s'entendant verticale sur sa hauteur, à proximité de la charnière passe fils 6. Cette barrette de masse 31 a l'une de ses extrémités reliée au profilé porteur 1.

Un capot métallique ou métallisé non montré peut être prévu pour recouvrir la face avant d'un ensemble de connexion. Il assure la continuité de blindage électromécanique en face avant.

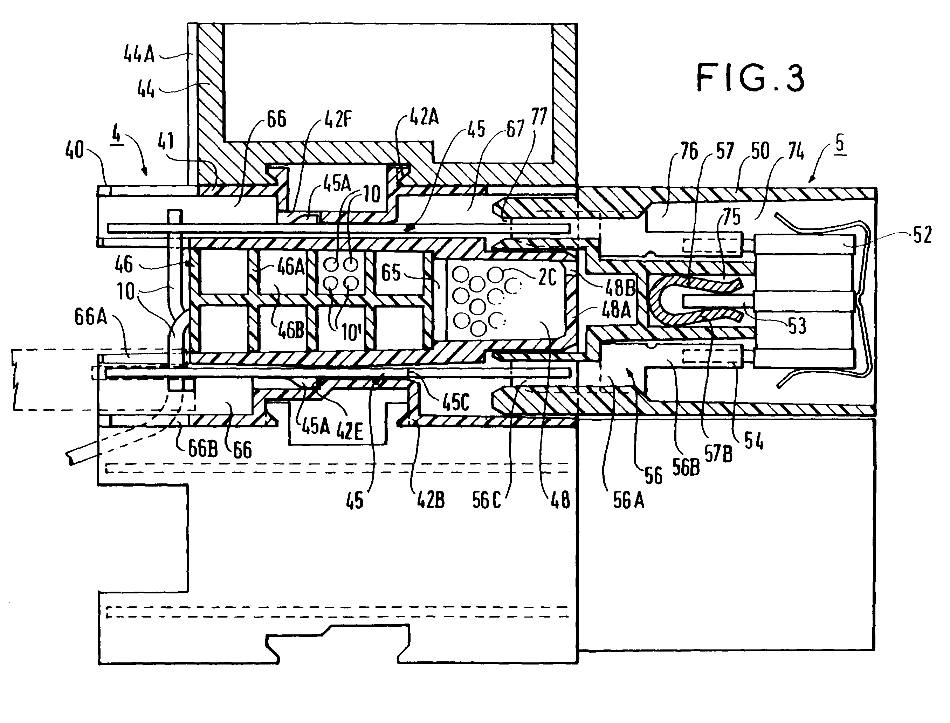

On précise immédiatement le montage relatif des galettes 40 et leur maintien dans leur ensemble de connexion 4, en regard de la figure 1 et/ou de la figure 3.

Ces galettes sont identiques les unes aux autres. Chacune est formée dans un corps isolant 41, ayant une forme générale de parallélépipède rectangle relativement plat. Les deux faces verticales les plus longues sont les faces avant et arrière. Le corps 41 présente extérieurement sur des deux grandes faces supérieure et inférieure un système de queue d'aronde 42, à partie mâle 42A et partie femelle 42B complémentaires, de guidage et d'accrochage direct de la galette considérée sur les galettes adjacentes de l'ensemble. Pour les deux galettes terminales de l'ensemble, on prévoit sur une embase, non représentée, et sur un porte étiquettes 44 (figure 3), les mêmes dispositions, ce porte étiquettes 44 retenant une étiquette 44A d'identification des lignes des différentes galettes.

Ce système de queue d'aronde 42 est parallèle aux bords avant et arrière des grandes faces de la galette. Il n'est pas continu sur la longueur de ces faces mais limité aux seules parties d'extrémité des deux faces supérieure et inférieure.

Alors que la barrette de masse 31 affectée à l'ensemble de connexion s'oppose à une translation accidentelle des galettes dans l'un des deux sens possibles, on prévoit en outre avantageusement deux bossages 43A et 43B, à l'autre bout des parties mâle et femelle du système 42 du côté de cette barrette, pour faire obstacle à une translation accidentelle des galettes dans l'autre sens. Ces bossages sont décalés légèrement pour s'encastrer l'un derrière l'autre.

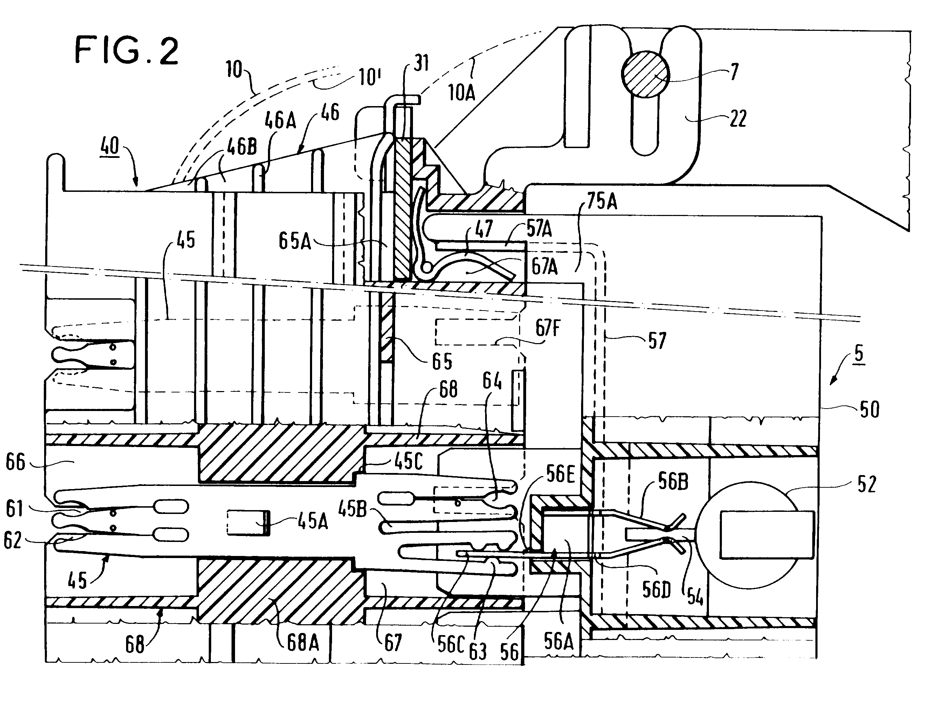

Les galettes de connexion 40 de l'un des ensembles de connexion 4 et son module individuel de protection 5, enfichable à l'arrière, sont décrits ci-après en se référant aux figures 2 et 3. Leur description est faite pour les conditions d'exploitation c'est-à-dire en considérant la galette dans son ensemble de connexion en position fermée sur son profilé porteur et en considérant chaque galette affectée à 7 paires de lignes définies par 7 paires de conducteurs raccordées à 7 paires de fils de jarretières de ligne.

Chaque galette de connexion 40 comporte essentiellement, montés à l'intérieur du corps 41 :
- quatorze contacts de ligne 45, de liaison directe des conducteurs des sept paires aux fils des jarretières de ligne 10, et éventuellement aux fils de jarretières de dérivation 10' ; ainsi que de raccordement du module de protection 5 pour cette galette ; ces contacts 45 sont des contacts plats montés horizontalement en deux rangées l'une supérieure et l'autre inférieure dans le corps 41 ; ils ont leurs deux extrémités accessibles sur la face avant et la face arrière, en définissant deux rangées de connexions doubles avant et deux rangées de connexions doubles arrière,
- un guide fils 46, monté entre les deux rangées de connexions avant dans le corps 41, recevant latéralement les fils des jarretières 10 et éventuellement 10' et les guidant jusqu'à ces connexions avant,
- un contact de liaison de masse 47 dans la partie arrière du corps 41 en contact à pression contre la barrette de masse 31.

Chaque module de protection 5 comporte essentiellement :
- un boîtier isolant 50, sensiblement de même longueur que les galettes, présentant deux pattes latérales 50A, 50B (figure 1) saillantes sur sa face avant, pour le guidage du module lors de son enfichage sur la face arrière de la galette qui le reçoit,
- un ensemble de parafoudres individuels, de préférence sept parafoudres tripolaires 52, montés en une rangée horizontale et retenus dans la partie arrière du boîtier 50, ces parafoudres ayant une patte centrale de masse 53 et deux pattes de ligne 54 alignées à l'intérieur du boîtier, selon sa hauteur pour chaque parafoudre, et en trois rangées sur la longueur du boîtier pour ces sept parafoudres,
- un collecteur de masse 57, monté à l'intérieur du boîtier, selon son axe longitudinal, sur lequel se raccordent les pattes de masse 53 des parafoudres,
- sept paires de contacts de protection de ligne 56, à l'intérieur du boîtier et de part et d'autre du collecteur de masse 57, sur lesquelles se raccordent les pattes de ligne 54 des parafoudres du module, ces contacts 56 étant par ailleurs saillants sur la face avant du boîtier pour leur raccordement aux connexions arrière convenables de la face arrière de la galette.

Sur la figure 2, on voit en outre que le collecteur de masse 57 présente également une queue de connexion 57A, accessible sur l'une des extrémités de la face avant du boîtier 50, pour venir en liaison en pression avec le contact de liaison de masse 47 dans le corps de la galette.

On précise l'agencement de chaque galette ci-après, en regard de ces figures 2 et 3.

Les contacts de ligne 45 sont identiques entre eux, mis à part un crevage 45A sensiblement médian sur chacun d'eux qui est plié d'un côté ou de l'autre des contacts selon qu'ils appartiennent à la rangée supérieure ou inférieure. Sur chacun de ces contacts 45, la connexion double avant est du type fourche double autodénudante. Elle définit une connexion avant de ligne 61 et une connexion avant de dérivation 62. La connexion double arrière est de type mixte, elle définit une connexion arrière de protection de ligne 63, du type à serrage de l'élément à y raccorder qu'elle reçoit, et une connexion arrière de ligne 64, du type fourche simple autodénudante, qui sont séparées l'une de l'autre par une fente d'élasticité 45B.

La connexion double arrière 63-64 est légèrement plus large que la connexion double avant 61-62 et la partie centrale à crevage 45A. Le contact 45 a en correspondance un épaulement 45C sur chacun de ses côtés, servant de butée pour sa mise en place dans le corps 41.

Le corps 41 est creux intérieurement, le système de queue d'aronde 42 étant sur ses parois supérieure et inférieure. Il présente une toile de séparation intérieure ajourée 65, légèrement à l'arrière du système de queue d'aronde 42. Une rangée de cheminées avant 66 et une rangée de cheminées arrière 67 sont définies dans chacune de ses parois supérieure et inférieure, d'un côté et de l'autre du système d'aronde. Ces cheminées avant et arrière sont cloisonnées par des cloisons verticales 68, s'étendant de la face avant à la face arrière. Ces cloisons ont leur partie centrale 68A de hauteur très réduite mais en surépaisseur très importante, formant de chaque côté un large épaulement saillant dans le fond des cheminées avant et arrière. Les cheminées avant et arrière de même rang dans la paroi supérieure ou inférieure communiquent pour le passage des contacts 45 à travers leur fond.

Les contacts 45 montés dans le corps 41 par la face arrière ou les cheminées arrière, sont guidés puis retenus entre les parties centrales 68A des cloisons. Leurs épaulements latéraux 45C sont bloqués en butée sur le bord arrière de la partie centrale des cloisons et le crevage 45A bloqué contre un épaulement 42E ou une fenêtre 42F prévu sur le fond du système de queue d'aronde, à l'intérieur du corps (figure 3).

La toile de séparation intérieure 65 délimite entre les rangées de cheminées avant et arrière une partie intérieure avant profonde et sert de butée au guide fils 46 inséré entre les deux rangées de cheminées avant.

Ce guide fils est une plaque isolante à nervures arquées 46A délimitant entre elles des canaux 46B ouverts sur l'un de ses bords latéraux et le long de son bord dit avant quand il est considéré en place. Il amène les paires de fils torsadés des différentes jarretières 10 et éventuellement 10' jusqu'aux différentes cheminées avant.

Les deux fils de chaque jarretière sont affectés aux deux connexions de ligne 61 ou de dérivation 62, selon le cas, des deux cheminées avant de même rang dans la rangée supérieure et celle inférieure. Ils sont séparés et chacun d'eux est raccordé à sa connexion à l'aide d'un outil spécial, de type connu, dont l'embout retenant le fil concerné est enfoncé dans la cheminée avant.

Pour ce raccordement, les cheminées avant présentent une large fenêtre 66A du côté du guide fils et une fenêtre étroite 66B du côté extérieur, en regard l'une de l'autre et ouvertes en bout de chaque cheminée. La fenêtre 66A laisse l'embout de l'outil faire saillie à travers elle du côté du guide fils, l'autre 66B est traversée par l'excès de longueur de fil, qui est coupé après le raccordement.

La partie arrière délimitée entre les deux rangées de cheminées arrière 67 par la toile de séparation 65 constitue un canal interne 48 pour les conducteurs 2C de câble desservant cette galette. Une série de dents alternées 48A, 48B, est saillante transversalement le long du bord arrière de la galette, entre les cheminées arrière. Elle retient les conducteurs dans ce canal et permet leur réparation pour leur raccordement aux connexions arrière de ligne 64, le long de la face arrière de la galette. Ce raccordement est effectué à l'aide du même outil spécial précité, dont l'embout avec le conducteur à raccorder à l'une des connexions arrière de ligne est enfoncé dans la cheminée arrière correspondante. Chaque cheminée arrière présente deux fenêtres étroites 67F dans ses parois opposées pour le conducteur reçu du canal et la surlongueur de ce conducteur, cette surlongueur étant supprimée après le raccordement.

On précise l'agencement du module de protection 5, ses contacts de protection de ligne 56 et son collecteur de masse 57 en regard des figures 2, 3 et/ou 4.

Les deux contacts de protection de ligne 56 pour un même parafoudre sont identiques, mis à part la disposition de leur queue de connexion, comme précisé ci-après. Chaque contact 56 est d'un seul tenant et réalisé par découpages et pliages convenables d'une même lame métallique. Il présente une partie centrale 56A pliée en U et,d'un côté de ce U, deux pattes élastiques 56B en regard l'une de l'autre partant du bord des branches du U, au voisinage de son fond, de connexion par serrage à l'une des pattes de ligne 54 du parafoudre, et de l'autre côté du U, une seule queue de connexion 56C partant de l'autre bord de l'une des branche du U, au voisinage du bout du U. Cette queue de connexion 56C est sur le bord de l'une ou l'autre des branches selon la rangée à laquelle appartient le contact dans le module, pour rendre symétriques les deux contacts concernés de ces deux rangées. Une découpe ou encoche 56D entre chaque patte élastique 56B et le fond de la partie centrale 56A et un crevage 56E dans la queue de connexion 56C permettent son maintien dans le boîtier 50 du module de protection. Le boîtier 50 est compartimenté sur sa longueur en logements individuels 74 pour les parafoudres et en outre sur sa hauteur en définissant trois alvéoles par logement dans sa partie arrière, ces alvéoles étant désignés par la référence 75 pour celui central et la référence 76 pour celui supérieur ou inférieur.

Aux deux rangées supérieure et inférieure d'alvéoles 76 correspondent deux rangées de cheminées avant 77 chacune prolongeant l'un de ces alvéoles. Ces alvéoles 76 retiennent les contacts de protection de ligne 56, auxquels sont raccordés directement les pattes de ligne 54 des parafoudres. La queue de connexion 56C de chaque contact 56 traverse le fond de l'alvéole 76 et s'étend dans la cheminée avant 77 qui la protège. Cette cheminée avant 77 est reçue dans la cheminée arrière 67 de la galette, elle assure en outre un guidage convenable du module de protection lors de son raccordement sur l'arrière de cette galette.

La rangée centrale d'alvéoles 75 est affectée au collecteur de masse 57. Ces alvéoles centraux non complétement compartimentés permettent la continuité de ce collecteur de masse dans leur fond sur la longueur du boîtier. Ce collecteur de masse 57 est constitué par une lame métallique conductrice, dont la queue de connexion 57A est définie par pliage de l'une de ses parties terminales. Il présente des paires de languettes latérales 57B le long des bords de lame, qui sont repliées en sens opposé de la queue de connexion 57A et forment des connexions élastiques de serrage des pattes de masse 53 des différents parafoudres. La queue de connexion 57A du collecteur de masse est reçu dans un alvéole supplémentaire 75A en bout de la rangée d'alvéoles 75 et contre la patte latérale 50A saillante sur la face avant du boîtier, formant sensiblement cheminée terminale de protection de cette queue de connexion.

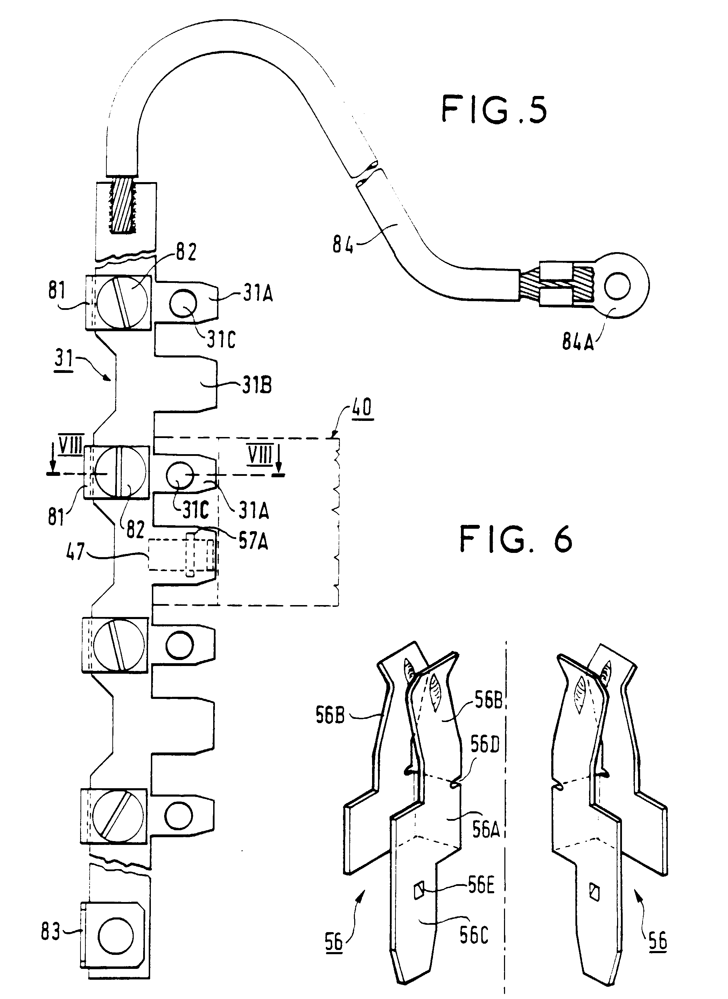

La liaison du collecteur de masse 57 à la barrette de masse 31 affectée aux galettes 50 de chaque ensemble de connexions est réalisée dès lors que le module de protection est enfiché sur l'arrière de la galette, par pression de la queue de connexion 57A sur le contact de liaison de masse 47. Elle est précisée en regard des figures 5 et 2.

La barrette 31 est une barre métallique conductrice montée verticale sur la hauteur de l'ensemble et encastrée partiellement dans les galettes. La figure 5 montre que cette barrette présente d'un même côté, pour chaque galette 40, deux pattes 31A et 31B. La première 31A supérieure et plus étroite que l'autre est dite de retenue dans la galette. Elle s'insère dans la partie latérale supérieure de la galette. Elle présente un trou 31C affecté à un bon accrochage relatif de la barrette et de chacune des différentes galettes individuelles. La deuxième patte 31B est dite de liaison avec le contact de liaison de masse 47 et vient dans la partie latérale médiane de chaque galette.

La barrette de masse 31 porte sur sa face avant, quand elle est considérée en place sur l'empilement des galettes, des étriers de fixation 81, pour les différentes galettes. Chaque étrier est fixé par une vis 82 sur la barrette, en regard de chaque patte supérieure de retenue 31A. Les étriers s'étendent sur la largeur de la barrette mais ne recouvrent pas les pattes 31A ; leur bord est replié et vient en butée contre le bord de la barrette exempt de pattes 31A et 31B. Chacun d'eux reçoit, entre lui et la barrette, le fil d'écran 10A des jarretières 10 ou 10' desservant la galette concernée, avant le guidage, sans écran, de leurs deux fils maintenus torsadés dans le guide fils 46 monté dans la partie avant du corps de la galette.

Cette barrette de masse a en outre, à l'une de ses extrémités, par exemple inférieure une cosse 83 de prise de masse pour des mesures éventuelles, et reçoit à l'autre de ces extrémités un cordon 84 de mise à la masse générale de la tête, donnée par son profilé porteur. Ce cordon 84 est soudé à la barrette et équipé à l'opposé d'une cosse terminale de raccordement 84A.

Le contact de liaison de masse 47 est une lame ressort conductrice sensiblement en V (figure 2), à branches arquées. Il est monté et retenu par sa base dans une cheminée terminale supplémentaire 67A prévue à son effet en bout du canal interne 48 entre les deux rangées de cheminées arrière 67 du corps de la galette.

Cette cheminée terminale supplémentaire 67A est prolongée vers l'arrière du corps 41 par la patte saillante extérieurement d'articulation 22 précitée. Une excroissance latérale 65A, prolongeant sensiblement l'entretoise de séparation 65 forme le fond de cette cheminée, elle laisse une fenêtre latérale d'accès pour pattes 31A et 31B de la barrette de masse, dans le fond, et vient retenir la barrette dont le trou 31C de la patte de retenue 31A de la barrette de masse 31 est bloqué dans des moyens complémentaires qu'elle présente.

Le contact de liaison de masse 47 l'une de ses branches bombée vers l'extérieur du V, s'étendant dans le fond de la cheminée 67A et venant en pression contre T'extrémité de la patte de liaison 31B. L'extrémité de cette branche est maintenue dans la paroi de cette cheminée. L'autre de ses branches bombée vers l'intérieur du V dans la cheminée 67B, reçoit en pression contre elle la queue de connexion 57A du collecteur de masse 57 du module de protection 5 correspondant. La patte 50A du boîtier 50 du module de protection 5 s'engage dans cette cheminée terminale 67A, contre la face interne de sa paroi externe et assure le maintien en pression de la queue de connexion 57A contre cette deuxième branche du contact 47.

Dans cette tête de câble, le module de protection est enfiché sur la face arrière de la galette après avoir effectué les raccordements des conducteurs de câble aux connexions arrière de ligne. Le module de protection enfiché vient sensiblement fermer les cheminées arrière de la galette.

Les cheminées avant de chaque galette peuvent quant à elles être fermées une fois les raccordements des jarretières réalisés, par un capuchon à graisse monté sur chacune d'elles ou sur chaque rangée.

## Revendications

1. Tête de câble à protection pour répartiteur téléphonique, comportant
- un profilé porteur métallique (1) de fixation sur le répartiteur, recevant au moins un câble à paires de conducteurs multiples,
- au moins un ensemble de connexion (4) fixé sur ledit profilé par l'intermédiaire d'un axe latéral (7) solidaire du profilé, pour son ouverture et sa fermeture sur le profilé, et formé par une pluralité de galettes de connexion (40) identiques empilées verticalement les unes sur les autres, avec chaque galette dans son ensemble considéré fermé sur le profilé équipée de connexions arrière de ligne (64) sur l'une de ses faces dite arrière, de raccordement des paires de conducteurs de câble (2), et de connexions avant de ligne (61) sur la face opposée dite avant, de raccordement de paires de fils de jarretières de ligne (10), pour le raccordement de lignes,
- des modules de protection de ligne (5), enfichables dans les galettes individuelles, chacun à dispositifs internes de protection (52) raccordés aux lignes individuelles, pour leur protection contre des surtensions,
ladite tête étant caractérisée en ce que :
- lesdites galettes (40) comportent des contacts internes plats (45) dits de ligne, disposés côte à côte en au moins une rangée, ayant chacune une première extrémité accessible sur ladite face avant de la galette considérée et y définissant, sous forme d'une connexion double autodénudante, l'une desdites connexions avant de ligne (61) et une connexion avant de dérivation associée (62) de raccordement d'un fil d'une jarretière de dérivation (10'), et la deuxième extrémité de ce même contact de ligne accessible sur ladite face arrière de la galette et y définissant, sous forme d'une connexion double mixte, l'une desdites connexions arrière de ligne (64), de type fourche simple autodénudante, et une connexion arrière dite de protection de ligne associée (63) de type connexion à serrage,
- et en ce que lesdits modules de protection sont enfichables chacun sur la face arrière de l'une desdites galettes, pour ladite tête ouverte, sur ledit profilé, et comportent des contacts internes dits de protection de ligne (56) ayant une de leurs extrémités raccordée intérieurement à des pattes de protection de ligne (54) desdits dispositifs de protection (52) et une seconde extrémité formant une queue de connexion (56A) accessible sur une face dite avant de chaque module et reçue dans l'une desdites connexions arrière de protection de ligne (63) de la galette (40).

2. Tête de câble selon la revendication 1, caractérisée en ce qu'elle comporte deux rangées de contacts de ligne (45) dans chaque galette, avec lesdits contacts de ligne, de même rang desdites rangées, affectés aux deux conducteurs de câble de la même paire.

3. Tête de câble selon la revendication 2, caractérisée en ce que lesdites connexions doubles avant et arrière (61-64) de chaque galette s'étendent dans des cheminées individuelles avant et arrière (66-67) saillantes sur la face avant et arrière de la galette, en deux rangées le long de chaque face.

4. Tête de câble selon l'une des revendications 2 et 3, caractérisée en ce que lesdits dispositifs de protection (52) sont de type tripolaire et présentent une patte de masse (53) et deux pattes de protection de ligne (54) et sont montés côte à côte dans un boîtier (50) du module de protection, et en ce que lesdits contacts de protection de ligne (56) sont disposés en deux rangées dans ledit boîtier (50), avec ceux de même rang recevant les deux pattes de protection de ligne (54) du même dispositif de protection (52) et ayant leurs queues de connexion (56C) reçues dans les deux connexions arrière de protection de ligne (63), également de même rang sur la face arrière de la galette (40).

5. Tête de câble selon la revendication 4, caractérisée en ce que lesdites queues de connexion (56C) desdits contacts de protection de ligne (56) s'étendent dans des cheminées individuelles avant (77) prévues sur ladite face avant dudit module de protection.

6. Tête de câble selon l'une des revendications 4 et 5, caractérisée en ce que chaque module de protection comporte en outre un collecteur de masse (57) monté entre les deux rangées de contacts de protection de ligne (56) et recevant les pattes de masse individuelles (53) des différents dispositifs de protection (52).

7. Tête de câble selon la revendication 6, caractérisée en ce que ledit collecteur de masse (57) est constitué par une lame conductrice, ayant des paires de pattes élastiques (57B) pliées en regard l'une de T'autre le long de ses bords, recevant les pattes de masse des différents dispositifs de protection, et présentant l'une de ses extrémités formant une queue de connexion de masse (57A) accessible en bout dudit module.

8. Tête de câble selon la revendication 7, caractérisée en ce que la queue de connexion (57A) dudit collecteur de masse (57) est pliée en sens opposé des paires de pattes élastiques (57B) et s'étend dans une cheminée terminale saillante en bout de la face avant dudit module, qui la protège.

9. Tête de câble selon la revendication 8, dans laquelle une barrette de masse (31) affectée à chaque ensemble de connexion s'étend latéralement sur sa hauteur, du même côté que ledit axe latéral (7) autour duquel s'ouvre et se ferme ladite tête, caractérisée en ce que chaque galette comporte, en outre, un contact supplémentaire de liaison de masse (47) venant en contact avec la barrette de masse (31) et accessible en bout de la face arrière de la galette, pour recevoir la queue de connexion (57A) du collecteur de masse (57) du module (5) enfiché sur l'arrière de la galette.

10. Tête de câble selon la revendication 9, caractérisée en ce que ledit contact de liaison de masse (47) est monté dans une cheminée terminale arrière (67A) de la galette, dans laquelle s'engage partiellement ladite barrette de masse (31).

11. Tête de câble selon l'une des revendication 3 à 10, caractérisée en ce que chaque galette comporte en outre un canal arrière interne (48) défini entre les deux rangées de cheminées arrière (67), recevant les paires de conducteurs (2C) de câble la desservant.

12. Tête de câble selon la revendication 11, caractérisée en ce que ledit canal arrière (48) est partiellement fermé le long de la face arrière de la galette (40) par une série de dents alternées (48A, 48B) solidaires des deux rangées de cheminées arrière (67) de ladite galette.

13. Tête de câble selon l'une des revendications 3 à 12, caractérisée en ce que chaque galette comporte en outre un guide fils (46) affecté au guidage desdites jarretières, monté entre les deux rangées de cheminées avant de ladite galette.

14. Tête de câble selon l'une des revendications 1 à 13, caractérisée en ce que chaque galette comporte, en outre, sur ses faces supérieure et inférieure délimitant entre elles lesdites faces avant et arrière de la galette, un système complémentaire de queue d'aronde (42), s'étendant parallèlement aux bords avant et arrière des faces supérieure et inférieure de la galette, assurant l'accrochage direct de l'une des galettes sur celle adjacente dans l'ensemble de connexion, quand l'ensemble de connexion est ouvert sur ledit profilé (1).

## Patentansprüche

1. Kabelkopf zum Schutz eines Telefonverteilers,
- mit einer metallischen Tragschiene (1) zur Befestigung auf dem Verteiler, die mindestens ein Kabel mit zahlreichen Leiterpaaren empfängt,
- mit mindestens einer Anschlußeinheit (4), die auf der Tragschiene über eine seitliche, mit der Tragschiene fest verbundene Achse (7) befestigt ist und auf der Tragschiene geöffnet und geschlossen werden kann sowie aus einer Vielzahl von senkrecht gestapelten gleichen Anschlußscheiben (40) gebildet wird, wobei jede Scheibe in der geschlossenen Stellung auf der Tragschiene mit hinteren Leitungsanschlüssen (64) auf einer Hinterseite zum Anschluß der Paare von Kabelleitern (2) und mit vorderen Leitungsanschlüssen (61) auf der entgegengesetzten, also der Vorderseite, zum Anschluß von Leiterpaaren von Leitungsschaltbrücken (10) zum Anschluß der Leitungen versehen ist,
- mit Leitungsschutzmoduln (5), die in die einzelnen Scheiben einsteckbar sind und je innere Schutzvorrichtungen (52) enthalten, die an die einzelnen Leitungen zu deren Schutz gegen Überspannungen angeschlossen sind,
dadurch gekennzeichnet, daß die Scheiben (40) innere flache Leitungskontakte (45) aufweisen, die nebeneinander in mindestens einer Reihe angeordnet sind und je ein erstes auf der Vorderseite der betrachteten Scheibe zugängliches Ende besitzen, das dort in Form eines doppelten, die Isolierung durchdringenden Anschlusses einen der vorderen Leitungsanschlüsse (61) und einen vorderen zugeordneten Ableitungsanschluß (62) für einen Ableitungs-Schaltbrückendraht (10') definiert, während ein zweites Ende dieses gleichen Leitungskontakts auf der Rückseite der Scheibe zugänglich ist und dort in Form eines gemischten doppelten Anschlusses einen der hinteren Leitungsanschlüse (64) vom einfachen Gabeltyp mit Durchdringung der Isolierung und einen hinteren zugeordneten Leitungsschutzanschluß (63) vom Klemmtyp definiert,
und daß die Schutzmoduln in die Hinterseite einer der Scheiben einsteckbar sind, wenn der Kopf auf der Profilschiene geöffnet ist, und innere Leitungsschutzkontakte (56) besitzen, die mit einem ihrer Enden innen an Leitungsschutzlaschen (54) der Schutzvorrichtungen (52) angeschlossen sind, während ein zweites Ende eine an der Vorderseite jedes Moduls zugängliche Anschlußfahne (56A) bildet, die in einer der hinteren Leitungsschutzanschlüsse (63) der Scheibe (40) empfangen wird.

2. Kabelkopf nach Anspruch 1, dadurch gekennzeichnet, daß er zwei Reihen von Leitungskontakten (45) in jeder Scheibe besitzt, wobei die Leitungskontakte gleichen Rangs in den Reihen den beiden Kabelleitern des gleichen Paars zugewiesen sind.

3. Kabelkopf nach Anspruch 2, dadurch gekennzeichnet, daß die vorderen und hinteren Doppelanschlüsse (61 bis 64) jeder Scheibe sich in die vorderen und hinteren Einzelschächte (66-67) erstrecken, die auf der Vorder- und Rückseite der Scheibe in zwei Reihen entlang jeder Seite vorstehen.

4. Kabelkopf nach einem der Ansprüche 2 und 3, dadurch gekennzeichnet, daß die Schutzvorrichtungen (52) dreipolig sind und eine Masselasche (53) sowie zwei Leitungsschutzlaschen (54) besitzen und Seite an Seite in einem Gehäuse (50) des Schutzmoduls montiert sind, und daß die Leitungsschutzkontakte (56) in zwei Reihen im Gehäuse (50) angeordnet sind, wobei die Kontakte gleichen Rangs die beiden Leitungsschutzlaschen (54) der gleichen Schutzvorrichtung empfangen und mit ihren Anschlußfahnen (56C) mit den beiden hinteren Leitungsschutzanschlüssen (63) ebenfalls des gleichen Rangs auf der Rückseite der Scheibe (40) in Verbindung stehen.

5. Kabelkopf nach Anspruch 4, dadurch gekennzeichnet, daß die Anschlußfahnen (56C) der Leitungsschutzkontakte (56) sich in die einzelnen vorderen Schächte (77) erstrecken, die auf der Vorderseite des Schutzmoduls vorgesehen sind.

6. Kabelkopf nach einem der Ansprüche 4 und 5, dadurch gekennzeichnet, daß jeder Schutzmodul weiter einen Massekollektor (57) enthält, der zwischen den beiden Reihen von Leistungsschutzkontakten (56) montiert ist und die einzelnen Masselaschen (53) der verschiedenen Schutzvorrichtungen (52) empfängt.

7. Kabelkopf nach Anspruch 6, dadurch gekennzeichnet, daß der Massekollektor (57) von einem leitenden Plättchen gebildet wird, das Paare von entlang seiner Ränder einander gegenüberliegenden gebogenen elastischen Laschen (57B) besitzt, die die Masselaschen der verschiedenen Schutzvorrichtungen empfangen, und daß das Plättchen an einem seiner Enden eine Masseanschlußfahne (57A) besitzt, die am Ende des Moduls zugänglich ist.

8. Kabelkopf nach Anspruch 7, dadurch gekennzeichnet, daß die Anschlußfahne (57A) des Massekollektors (57) in entgegengesetzter Richtung zu den Paaren von elastischen Laschen (573) umgebogen ist und sich in einen Endschacht erstreckt, der am Ende der Vorderseite des Moduls vorsteht, der den Kopf schützt.

9. Kabelkopf nach Anspruch 8, in dem eine Masseleiste (31), die jeder Anschlußeinheit zugeordnet ist, sich seitlich über ihre Höhe in der Nähe der seitlichen Achse (7) erstreckt, um die der Kopf geöffnet und geschlossen wird, dadurch gekennzeichnet, daß die Scheibe außerdem einen zusätzlichen Masseverbindungskontakt (47) aufweist, der mit der Masseleiste (31) in Kontakt steht und am Ende der hinteren Seite der Scheibe zugänglich ist, um die Anschlußfahne (57A) des Massekollektors (57) des von hinten in die Scheibe eingesteckten Moduls (5) zu empfangen.

10. Kabelkopf nach Anspruch 9, dadurch gekennzeichnet, daß der Masseverbindungskontakt (47) in einem hinteren Endschacht (67A) der Scheibe montiert ist, in den die Masseleiste (31) teilweise eindringt.

11. Kabelkopf nach einem der Ansprüche 3 bis 10, dadurch gekennzeichnet, daß jede Scheibe außerdem einen hinteren inneren Kanal (48) aufweist, der zwischen den beiden Reihen von hinteren Schächten (67) definiert ist und die Leiterpaare (2C) des zugeordneten Kabels empfängt.

12. Kabelkopf nach Anspruch 11, dadurch gekennzeichnet, daß der hintere Kanal (48) teilweise entlang der Hinterseite der Scheibe (40) durch eine Reihe von abwechselnden Zähnen (48A, 48B) verschlossen ist, die Teil der beiden Reihen von hinteren Schächten (67) der Scheibe sind.

13. Kabelkopf nach einem der Ansprüche 3 bis 12, dadurch gekennzeichnet, daß jede Scheibe außerdem eine Drahtführung (46) aufweist, die die Schaltbrücken führt und zwischen den beiden Reihen von vorderen Schächten der Scheibe montiert ist.

14. Kabelkopf nach einem der Ansprüche 1 bis 13, dadurch gekennzeichnet, daß jede Scheibe außerdem auf ihrer Ober- und Unterseite, die zwischen sich die Vorder- und Rückseite der Scheibe begrenzen, ein komplementäres Schwalbenschwanzsystem (42) enthält, das sich parallel zu den vorderen und hinteren Rändern der Oberseite und Unterseite der Scheibe erstreckt und eine direkte Befestigung einer Scheibe auf der Nachbarscheibe in der Anschlußeinheit gewährleistet, wenn die Anschlußeinheit auf der Profilschiene (1) geöffnet ist.

## Claims

1. Protected cable termination for telephone distribution frames including
- a metal support member (1) adapted to be fixed to the distribution frame and receiving at least one cable comprising multiple pairs of conductors,
- at least one connection assembly (4) fixed to said support member by a lateral spindle (7) attached to the support member to enable it to open and close on the support member and formed by a plurality of identical connection pallets (40) stacked vertically, with each pallet in its stack considered closed on the support member equipped with rear line connections (64) on a rear face, for connecting conductor pairs of a cable (2), and front line connections (61) on the opposite or front face, for connecting pairs of line jumper link wires (10) in order to connect lines,
- line protection modules (5) adapted to be plugged into the individual pallets and each having internal protection devices (52) connected to the individual lines to protect them against overvoltages,
said termination being characterised in that:
- said pallets (40) include flat internal line contacts (45) disposed side-by-side in at least one row, each having a first end accessible on said front face of the pallet in question and there defining, in the form of a double insulation displacement connection, one of said front line connections (61) and an associated front branch connection (62) for connecting a wire of a branch jumper link (10'), and the second end of the same line contact accessible on said rear face of the pallet and there defining, in the form of a composite double connection, one of said rear line connections (64), of the single fork insulation displacement type, and an associated rear line protection connection (63) of the clamp type,
- and in that said protection modules are each adapted to plug into the rear face of one of said pallets, with said termination open, on said support, and include internal line protection contacts (56) having one end connected internally to line protection leads (54) of said protection devices (52) and a second end forming a connection tail (56A) accessible on a front face of each module and received in one of said rear line protection connections (63) of the pallet (40).

2. Cable termination according to claim 1 characterised in that it includes two rows of line contact (45) in each pallet with said line contacts of the same rank in said rows assigned to the two cable conductors of the same pair.

3. Cable termination according to claim 2 characterised in that said double front and rear connections (61-64) of each pallet extend in individual front and rear chimneys (66-67) projecting from the front and rear faces of the pallet, in two rows along each face.

4. Cable termination according to claim 2 or claim 3 characterised in that said protection devices (52) are of the three-pole type and have an earth lead (53) and two line protection leads (54) and are mounted side-by-side in a box (50) of the protection module, and in that said line protection contacts (56) are disposed in two rows in said box (50), with those of the same rank receiving the two line protection leads (54) of the same protection device (52) and having their connection tails (56C) received in the two line protection rear connections (63) of the same rank on the rear face of the pallet (40).

5. Cable termination according to claim 4 characterised in that said connection tails (56C) of said line protection contacts (56) extend in individual front chimneys (77) on said front face of said protection module.

6. Cable termination according to claim 4 or claim 5 characterised in that each protection module further includes an earth collector (57) mounted between the two rows of line protection contacts (56) and receiving the individual earth leads (53) of the various protection devices (52).

7. Cable termination according to claim 6 characterised in that said earth collector (57) is a conductive blade having pairs of elastic lugs (57B) bent to face each other along its edges receiving the earth leads of the various protection devices and having one end forming an earth connection tail (57A) accessible at the end of said module.

8. Cable termination according to claim 7 characterised in that the connection tail (57A) of said earth collector (57) is bent in the opposite direction to the pairs of elastic lugs (57B) and extends in an end chimney projecting from the end of the front face of said module, which protects it.

9. Cable termination according to claim 8 wherein an earth strip (31) assigned to each connection assembly extends laterally over its height, on the same side as said lateral spindle (7) about which said termination opens and closes, characterised that each pallet further includes an additional earth connection contact (47) coming into contact with the earth strip (31) and accessible at the end of the rear face of the pallet to receive the connection tail (57A) of the earth collector (57) of the module (5) plugged into the rear of the pallet.

10. Cable termination according to claim 9 characterised in that said earth connection contact (47) is mounted in a rear end chimney (67A) of the pallet in which said earth strip (31) is partially engaged.

11. Cable termination according to any one of claims 3 to 10 characterised in that each pallet further includes an inside rear passage (48) defined between the two rows of rear chimneys (67) and receiving the conductor pairs (2C) of the cable connected to it.

12. Cable termination according to claim 11 characterised in that said rear passage (48) is partially closed along the rear face of the pallet (40) by a series of alternating teeth (48A, 48B) attached to the two rows of rear chimneys (67) of said pallet.

13. Cable termination according to any one of claims 3 to 12 characterised in that each pallet further includes a wire guide (46) for guiding said jumper links mounted between the two rows of front chimneys of said pallet.

14. Cable termination according to any one of claims 1 to 13 characterised in that each pallet further includes on its top and bottom faces delimiting between them said front and rear faces of the pallet a complementary dovetail system (42) extending parallel to the front and rear edges of the top and bottom faces of the pallet, for direct hooking of one of the pallets onto the adjacent one in the connection assembly when the connection assembly is open on said support (1).
